# EUROPÄISCHE PATENTSCHRIFT

(11) **EP 2 145 357 B1**
(45) Veröffentlichungstag und Bekanntmachung des Hinweises auf die Patenterteilung: **15.01.2014**
(21) Anmeldenummer: 08758030.4
(22) Anmeldetag: 06.05.2008
(51) Int. Cl.: H01M 2/20, H01M 2/22

(54) **BATTERIE**
BATTERY
BATTERIE

(30) Priorität: 09.05.2007 DE 102007022246
(43) Veröffentlichungstag der Anmeldung: 20.01.2010
(73) Patentinhaber: Johnson Controls Autobatterie GmbH & Co. KGaA, 30419 Hannover (DE)
(72) Erfinder: STREUER, Peter, 30559 Hannover (DE); KOCH, Ingo, 31789 Hameln (DE); OLDENBURG, Dirk, 30952 Ronnenberg (DE)
(74) Vertreter: Stornebel, Kai
(86) Internationale Anmeldenummer: PCT/DE2008/000771
(87) Internationale Veröffentlichungsnummer: WO 2008/138307

(56) Entgegenhaltungen:
- EP-A- 0 547 661
- JP-A- 57 105 960

## Beschreibung

Die Erfindung betrifft eine Batterie mit einem Batteriezellenverbindungselement, das einen sich entlang einer Längsachse erstreckenden, im Wesentlichen prismatischen Grundkörper zum Verbinden mit einer Mehrzahl an Polplatten an einer Unterfläche des Grundkörpers und eine Kontaktlasche, die benachbart zu einer kontaktlaschenseitigen Stirnseite des Grundkörpers angeordnet und mit diesem einstückig verbunden ist, umfasst.

Derartige Batterien in Form von Bleiakkumulatoren werden beispielsweise als Starterbatterien in einem Automobil verwendet. Ein solcher Bleiakkumulator besteht aus mehreren galvanischen Zellen, die in Reihe geschaltet sind und voneinander durch eine elektrisch isolierende Trennwand getrennt sind. Jede der galvanische Zellen umfasst einen positiven und einen negativen Plattensatz, die beide jeweils aus mehreren Polplatten aufgebaut sind. Das Batteriezellenverbindungselement verbindet die Polplatten eines Plattensatzes untereinander elektrisch und mechanisch und dient zusätzlich dazu, den Plattensatz einer galvanischen Zelle über ein weiteres Batteriezellenverbindungselement mit einem anderen Plattensatz einer galvanischen Zelle durch die Trennwand hindurch elektrisch zu kontaktieren.

Bei der Fertigung derartiger Bleiakkumulatoren werden die Polplatten meist in einem Fahnenangussverfahren mit dem Batteriezellenverbindungselement verbunden. Anschließend werden die so verbundenen Polplatten in dem Bleiakkumulator verbaut.

Bei bekannten Bleiakkumulatoren besteht die Gefahr, dass Polplatten sich von dem Batteriezellenverbindungselement lösen. Es kommt dadurch zu unerwünschtem Ausschuss bei der Produktion. Aufgrund von Vibrationen während des Betriebs des Bleiakkumulators können sich schlecht mit dem Batteriezellenverbindungselement verbundene Polplatten teilweise lösen und führen so zu einem erhöhten Innenwiderstand des Bleiakkumulators.

Der Erfindung liegt die Aufgabe zugrunde, Nachteile im Stand der Technik zu überwinden. Die Erfindung löst das Problem durch eine gattungsgemäße Batterie, bei der das Batteriezellenverbindungselement eine in dem Grundkörper ausgebildete, in die Unterfläche auslaufende Nut in der kontaktlaschenseitigen Stirnseite des Grundkörpers besitzt, wobei die Nut entlang einer vollen Höhe in dem Grundkörper ausgebildet ist.

Gemäß einem zweiten Aspekt löst die Erfindung das Problem durch ein Verfahren zum Herstellen eines Batteriezellenverbindungselement für eine Batterie und zum Angießen von Polplatten mit dem Batteriezellenverbindungselement, insbesondere einen Bleiakkumulator, mit den Schritten (a) Bereitstellen einer Mehrzahl an Polplatten und (b) Angießen der Polplatten mit dem Batteriezellenverbindungselement, sodass das entstehende Batteriezellenverbindungselement folgendes umfasst: (i) einen sich entlang einer Längsachse erstreckenden, im Wesentlichen prismatischen Grundkörper zum Verbinden mit der Mehrzahl an Polplatten an einer Unterseite des Grundkörpers, (ii) eine Kontaktlasche, die benachbart zu einer kontaktlaschenseitigen Stirnseite des Grundkörpers angeordnet ist und mit diesem einstückig verbunden ist, und (iii) eine in dem Grundkörper ausgebildete, in die Unterseite laufende Nut in der kontaktlaschenseitigen Stirnseite des Grundkörpers, wobei die Nut entlang einer vollen Höhe in dem Grundkörper ausgebildet ist.

Vorteilhaft hieran ist, dass ein Herausbrechen von benachbart zur Kontaktlasche angeordneten Polplatten vermieden wird. Beim Angießen des Batteriezellenverbindungselements im Rahmen des Herstellungsverfahrens der Batterie ragt nämlich in der Gussform, mittels der das Batteriezellenverbindungselement gegossen wird, ein Vorsprung, der die Nut formt, in den Gussraum und verhindert, dass Polplatten mit ihren Angussfahnen zu dicht an einem Rand des Batteriezellenverbindungselements angeordnet werden können.

Vorteilhaft ist zudem, dass die Erfindung mit einfachen Mitteln umsetzbar ist. So muss lediglich die Gussform geändert werden, um die Gefahr des Herausbrechens von Polplatten weitgehend zu eliminieren.

Vorteilhafterweise wird zudem weniger Material für das Batteriezellenverbindungselement, beispielsweise Blei, benötigt, um einen erfindungsgemäßes Batteriezellenverbindungselement herzustellen, ohne dass sich ein elektrischer Innenwiderstand der erfindungsgemäßen Batterie ändert.

Im Rahmen der vorliegenden Beschreibung wird unter dem Merkmal, dass der Grundkörper im Wesentlichen prismatisch ist, verstanden, dass es nicht notwendig ist, dass der Grundkörper im streng mathematischen Sinne prismatisch ist. So ist es beispielsweise möglich, dass sich der Grundkörper mit zunehmendem Abstand von der Kontaktlasche in Längsrichtung leicht konisch verjüngt.

In einer bevorzugten Ausführungsform verläuft die Nut im Wesentlichen senkrecht zur Unterfläche des Grundkörpers. Auf diese Weise wird ein Gießen des Batteriezellenverbindungselements erleichtert. Es ist möglich, nicht aber notwendig, dass die Nut prismatisch ist, das heißt, dass sich die Querschnittsform und die Querschnittsfläche über die Längserstreckung der Nut nicht verändert. So ist es beispielsweise möglich, dass sich die Nut mit zunehmendem Abstand von der Unterfläche konisch verjüngt, wodurch ein Entformen des Batteriezellenverbindungselements erleichtert wird. Unter dem Merkmal, dass die Nut im Wesentlichen senkrecht zur Unterfläche verläuft, ist zu verstehen, dass es möglich, nicht aber notwendig ist, dass die Nut im streng mathematischen Sinne senkrecht zur Unterfläche verläuft. Beispielsweise sind Abweichungen unterhalb von 15° insbesondere dann tolerierbar, wenn die Nut konisch zuläuft bzw. ein Entformen möglich bleibt.

Es ist beispielsweise möglich, dass die Nut in einer Ebene, die senkrecht zur Unterfläche des Grundkörpers und in dessen Längsrichtung verläuft, zu einer Mitte des Grundkörpers hin um einen Winkel zwischen 10° und 20°, insbesondere um 15°, geneigt ist. Eine derartige Nut verbessert die Führung und die Einbindung einer benachbarten, randständigen Angussfahne und erleichtert zudem ein Entformen des Batteriezellenverbindungselements.

Bevorzugt läuft die Nut im Wesentlichen mittig bezüglich einer Breite des Grundkörpers in die Unterfläche aus. In anderen Worten läuft die Nut an einer Stelle in die Unterfläche aus, durch die eine Längs-Mittellinie der Unterfläche verläuft. Auf diese Weise wird die kontaktlaschenseitige, randständige Polplatte besonders sicher am Batteriezellenverbindungselement befestigt.

Gemäß der Erfindung ist die Nut entlang einer vollen Höhe der Kontaktlasche ausgebildet. In anderen Worten durchsetzt die Nut die volle Höhe der kontaktlaschenseitigen Stirnfläche des Batteriezellenverbindungselements.

Bevorzugt hat der Grundkörper eine konkave, der Unterfläche gegenüberliegende Oberseite, die eine sich in Längsrichtung erstreckende Rille besitzt, die in der kontaktlaschenseitigen Stirnfläche in die Nut ausläuft. Besonders bevorzugt verläuft der Grundkörper im Wesentlichen senkrecht zur Kontaktlasche, wobei der Grundkörper in einen kontaktlaschenseitigen Längsabschnitt und einen kontaktlaschenabgewandten Längsabschnitt unterteilt ist, und der kontaktlaschenseitige Längsabschnitt in einer Schulter in die Kontaktlasche ausläuft. Der Grundkörper ist damit asymmetrisch bezüglich einer in Längsrichtung verlaufenden Ebene, die senkrecht zur Unterfläche steht, wobei der kontaktlaschenseitige Längsabschnitt ein größeres Volumen besitzt als der kontaklaschenabgewandte Längsabschnitt. Hierdurch wird vorteilhafterweise der elektrische Innenwiderstand der Batterie vermindert.

In einer bevorzugten Ausführungsform ist das Batteriezellenverbindungselement mit einer Mehrzahl an Polplatten verbunden, die jeweils eine Angussfahne mit einer Angussfahnenbreite besitzen, wobei eine Nutbreite der Nut kleiner als die Hälfte der Aufnahmebreite. Auf diese Weise wird eine sichere mechanische Verbindung zwischen der kontaktlaschenseitigen randständigen Polplatte und dem Batteriezellenverbindungselement erreicht. Günstig ist zudem, wenn die Nutbreite größer ist als ein Zehntel der Angussfahnenbreite.

Im Folgenden wird eine Ausführungsform der Erfindung anhand der beigefügten Zeichnungen näher erläutert. Dabei zeigt
- Figur 1: eine erfindungsgemäße Batterie in einer Draufsicht,
- Figur 2: eine perspektivische Ansicht eines erfindungsgemäßen Batteriezellenverbindungselements aus der Batterie nach Figur 1,
- Figur 3a: eine Draufansicht des Batteriezellenverbindungselements nach Figur 2,
- Figur 3b: eine alternative Ausführungsform eines erfindungsgemäßen Batteriezellenverbindungselements,
- Figur 4: eine Ansicht auf eine Längsseite des Batteriezellenverbindungselements nach den Figuren 2 und 3a,
- Figur 5: eine Draufsicht auf eine kontaktlaschenabgewandte Stirnseite des Batteriezellenverbindungselements und
- Figur 6: eine Ausführungsform eines Batteriezellenverbindungselements nach dem Stand der Technik.

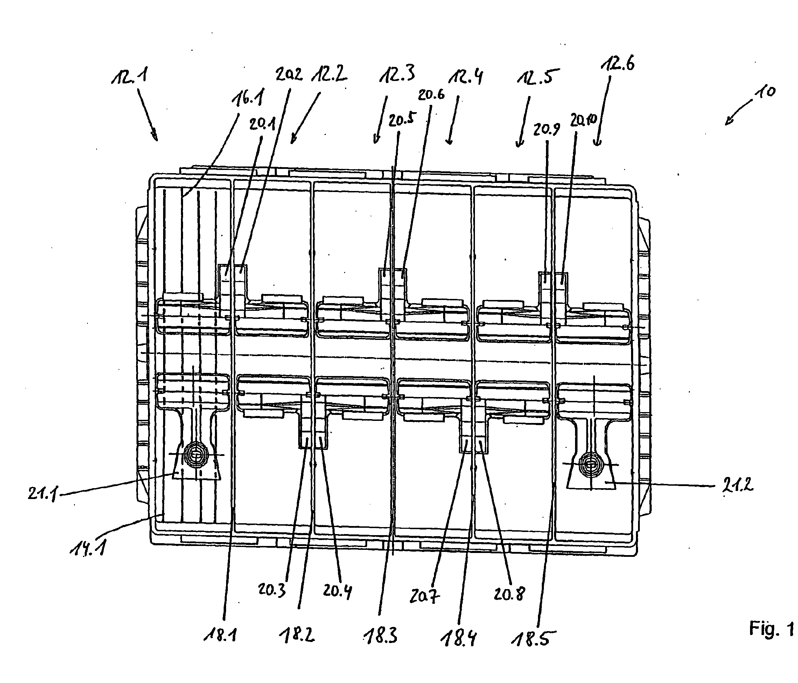

Figur 1 zeigt eine Batterie 10 in Form eines Bleiakkumulators, der als Pkw-Starterbatterie dient, in einer Draufsicht. Die Batterie 10 umfasst galvanische Zellen 12.1 bis 12.6. Die galvanische Zelle 12.1 umfasst einen positiven Plattensatz 14.1 und einen negativen Plattensatz 16.1. Auf gleiche Weise besitzen die übrigen galvanischen Zellen 12.2 bis 12.6 entsprechende positive bzw. negative Plattensätze 14.2 bis 14.6 bzw. 16.2 bis 16.6, die jeweils nicht eingezeichnet sind. Die galvanischen Zellen 12.1 bis 12.6 sind durch Trennwände 18.1 bis 18.5 voneinander räumlich und elektrisch getrennt und in einem spritzgegossenen Gehäuse angeordnet.

Jeder der Plattensätze 14.1 bis 14.6 bzw. 16.1 bis 16.6 umfasst mehrere Polplatten, die mechanisch und elektrisch mit einem Batteriezellenverbindungselement 20.1 bis 20.10 oder einem Anschlussverbinder 21.1 bzw. 21.2 verbunden sind. Jeweils zwei Batteriezellenverbindungselemente, beispielsweise 20.1 und 20.2 bzw. 20.3. und 20.4, sind durch eine nicht eingezeichnete Öffnung in der jeweiligen Trennwand 18.1. bzw. 18.2. miteinander elektrisch und mechanisch verbunden, so dass die galvanischen Zellen 12.1 bis 12.3 in Reihe geschaltet sind. Im Folgenden bezeichnen Bezugszeichen ohne Zählsuffix das Objekt als solches.

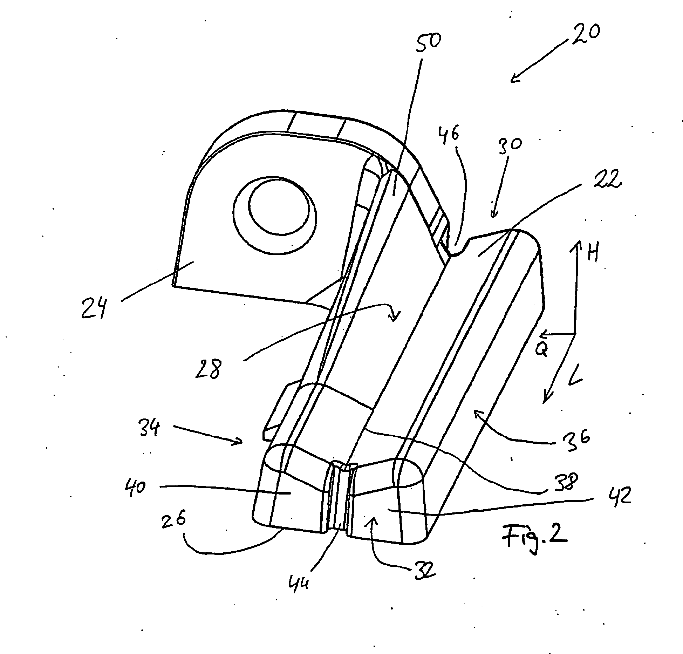

Figur 2 zeigt das Batteriezellenverbindungselement 20, das einen sich entlang einer Längsachse L erstreckenden, im Wesentlichen prismatischen Grundkörper 22 und eine Kontaktlasche 24 umfasst, die sich in eine Querachse Q erstreckt, die senkrecht zur Längsachse L und zur Hochachse H verläuft. Die Hochachse H verläuft in Einbaulage der Batterie des Batteriezellenverbindungselements 20 vertikal. Die Kontaktlasche 24 und der Grundkörper 22 sind einstückige Bestandteile des durch Gießen hergestellten Verbindungselements 20.

Das Batteriezellenverbindungselement 20 besitzt eine Grundgestalt in Form eines geraden Prismas mit einer Unterseite 26, einer Oberseite 28, einer kontaktlaschenseitigen Stirnseite 30, einer kontaktlaschenabgewandten Stirnseite 32, einer kontaktlaschenseitigen Längsseite 34 und einer kontaktlaschenabgewandten Längsseite 36. Entlang der Längsachse L verläuft im Wesentlichen auf halber Strecke zwischen den Längsseiten 34 und 36 eine Rille 38, die den Grundkörper 22 in einen kontaktlaschenseitigen Längsabschnitt 40 und einen kontaktlaschenabgewandten Längsabschnitt 42 unterteilt.

In der kontaktlaschenabgewandten Stirnseite 32 ist eine erste Nut 44 ausgebildet, die die gesamte Stirnseite 32 durchsetzt, das heißt, von der Unterseite 26 bis zur Oberseite 28 des Batteriezellenverbindungselement 20 verläuft. Symmetrisch zu einer Ebene, die senkrecht auf der Längsachse L und parallel zu der Querachse Q verläuft, ist in der kontaktlaschenseitigen Stirnseite 30 eine zweite Nut 46 ausgebildet, die ebenfalls von der Unterseite 26 bis zur Oberseite 28 verläuft und damit entlang einer vollen Höhe in der Kontaktlasche 24 ausgebildet ist. Die erste Nut 44 und die zweite Nut 46 verlaufen entlang der Hochachse H. Sie sind um 10° bis 20°, beispielsweise um 15°, in Richtung der Längsachse L, also nach innen, geneigt. Dadurch werden die nicht eingezeichneten Angussfahnen der ebenfalls nicht eingezeichneten Polplatten besser eingebunden. Die beiden Nuten 44, 46 werden zudem durch die Rille 38.verbunden. Es ist nicht notwendig, dass die Nuten 44, 46 seitlich von dem kontaktlaschenabgewandten Längsabschnitt 42 begrenzt werden. Es ist vielmehr ausreichend wenn die Nuten 44, 46 nur von dem kontaktlaschenseitigen Längsabschnitt 40 begrenzt sind und so ein Vorsprung gebildet ist.

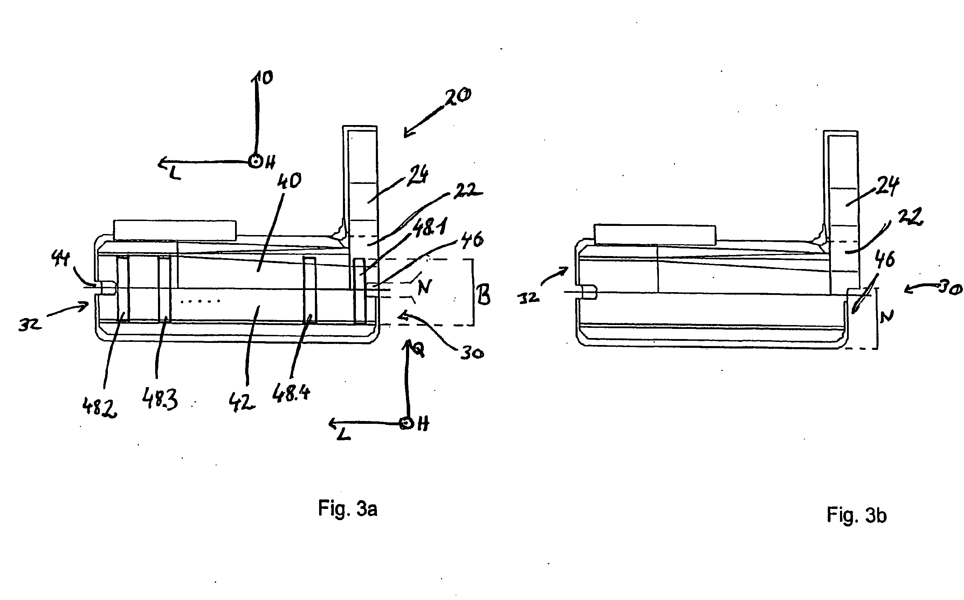

Figur 3a zeigt eine Draufsicht auf das Batteriezellenverbindungselement 20 in einer Ebene senkrecht zur Hochachse H. Es sind schematisch Angussfahnen 48.1, 48.2 von Polplatten eines Plattensatzes 14 bzw. 16 eingezeichnet. Es ist zu erkennen, dass beide Angussfahnen 48.1, 48.2 jeweils benachbart zu einer Nut 46 bzw. 44 angeordnet sind. Weitere Angussfahnen 48.3, 48.4 stehen exemplarisch für eine Vielzahl an äquidistant angeordneten Angussfahnen der Polplatten des jeweiligen Plattensatzes. Die Angussfahnen 48.1, ..., 48.4 besitzen eine Angussfahnenbreite B, die im vorliegenden Fall siebenmal so breit ist wie eine Nutbreite N der zweiten Nut 46.

Figur 3b zeigt eine alternative Ausführungsform eines erfindungsgemäßen Batteriezellenverbindungselement 20, bei dem die Nut 46 den gesamten kontaktlaschenabgewandten Längsabschnitt 42 an dessen Stirnseite durchsetzt und in die kontaktlaschenabgewandte Längsseite 36 mündet. In diesem Fall beträgt die Nutbreite N die halbe Breite des Grundkörpers 22. Der Grundkörper 22 erstreckt sich, wie auch in den übrigen Figuren, stets von der kontaktlaschenabgewandten Stirnseite 32 zur kontaktlaschenseitigen Stirnseite 30.

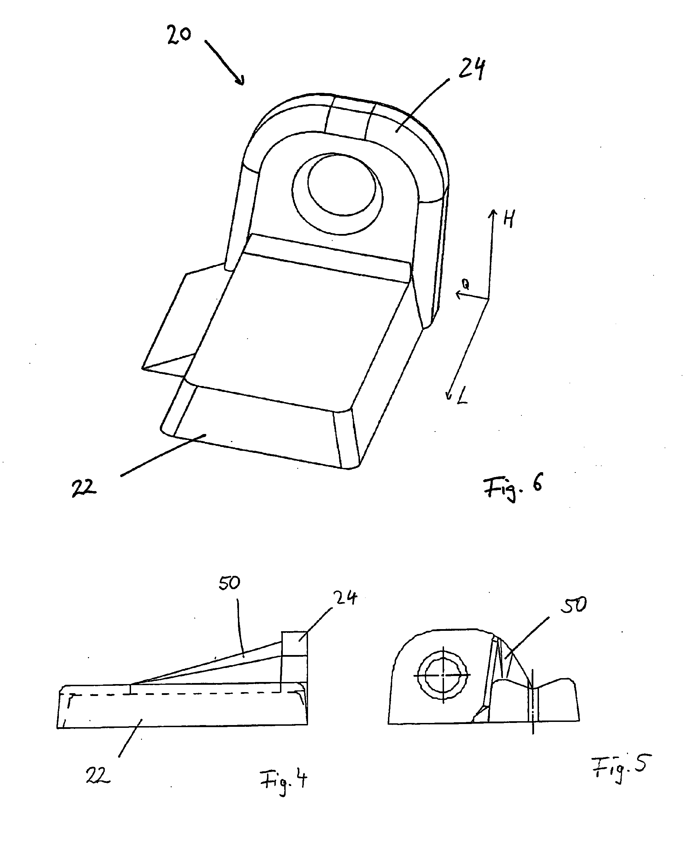

Figur 4 zeigt eine Seitenansicht in Richtung der Querachse Q, die eine Schulter 50 des kontaktlaschenseitigen Längsabschnitts 40 (vgl. Figur 2) erkennen lässt.

Wie Figur 5 zeigt, stellt die Schulter 50 eine Materialverstärkung dar, so dass der kontaktlaschenseitige Längsabschnitt 40 in der Nähe der kontaktlaschenseitigen Stirnseite 30 (vgl. Figur 2) einen größeren Querschnitt besitzt als der kontaktlaschenabgewandte Längsabschnitt 42.

Figur 6 zeigt eine Ausführungsform nach dem Stand der Technik, die als Tomb-Stone-Verbinder bekannt ist.

### Bezugszeichenliste

- 10: Batterie
- 12: galvanische Zelle
- 14: positiver Plattensatz
- 16: negativer Plattensatz
- 18: Trennwand

- 20: Batteriezellenverbindungselement
- 21: Anschlussverbinder
- 22: Grundkörper
- 24: Kontaktlasche
- 26: Unterseite
- 28: Oberseite

- 30: kontaktlaschenseitige Stirnseite
- 32: kontaktlaschenabgewandte Stirnseite
- 34: kontaktlaschenseitige Längsseite
- 36: kontaktlaschenabgewandte Längsseite
- 38: Rille

- 40: kontaktlaschenseitiger Längsabschnitt
- 42: kontaktlaschenabgewandter Längsabschnitt
- 44: erste Nut
- 46: zweite Nut
- 48: Angussfahne
- 50: Schulter

- L: Längsachse
- H: Hochachse
- Q: Querachse
- B: Angussfahnenbreite
- N: Nutbreite

## Patentansprüche

1. Batterie, insbesondere Bleiakkumulator, mit mindestens einem Batteriezellenverbindungselement (20), das
(a) einen sich entlang einer Längsachse (L) erstreckenden, im Wesentlichen prismatischen Grundkörper (22) zum Verbinden mit einer Mehrzahl an Polplatten an einer Unterseite (26) des Grundkörpers (22) und
(b) eine Kontaktlasche (24), die benachbart zu einer kontaktlaschenseitigen Stirnseite (30) des Grundkörpers (22) angeordnet ist und mit diesem einstückig verbunden ist, umfasst,
**gekennzeichnet durch** eine in dem Grundkörper (22) ausgebildete, in die Unterseite (26) laufende Nut (46) in der kontaktlaschenseitigen Stirnseite (30) des Grundkörpers (22), wobei die Nut (46) entlang einer vollen Höhe in dem Grundkörper (22) ausgebildet ist.

2. Batterie nach Anspruch 1, **dadurch gekennzeichnet, dass** die Nut (46) im Wesentlichen senkrecht zur Unterseite (26) verläuft.

3. Batterie nach Anspruch 1 oder 2, **dadurch gekennzeichnet, dass** die Nut (46) um 10° bis 20°, insbesondere um 15°, in Richtung der Längsachse (L) geneigt zur Unterseite verläuft.

4. Batterie nach einem der vorstehenden Ansprüche, **dadurch gekennzeichnet, dass** die Nut (46) im Wesentlichen mittig bezüglich einer senkrecht zur Längsachse (L) verlaufenden Querachse (Q) in die Unterseite (26) ausläuft.

5. Batterie nach einem der vorstehenden Ansprüche, **dadurch gekennzeichnet, dass** der Grundkörper (22) eine konkave, der Unterseite (26) gegenüberliegende Oberseite (28) hat, die eine sich entlang der Längsachse (L) erstreckende Rille (38) umfasst, die in der kontaktlaschenseitigen Stirnseite (30) in die Nut (46) ausläuft.

6. Batterie nach Anspruch 4, **dadurch gekennzeichnet, dass** die Rille (38) im Wesentlichen senkrecht zur Kontaktlasche (24) verläuft und den Grundkörper (22) in einen kontaktlaschenseitigen Längsabschnitt (40) und einen kontaktlaschenabgewandten Längsabschnitt (42) unterteilt, wobei der kontaktlaschenseitige Längsabschnitt (40) in einer Schulter (50) in die Kontaktlasche (24) ausläuft.

7. Batterie nach einem der vorstehenden Ansprüche, **dadurch gekennzeichnet, dass** der Grundkörper die Gestalt eines geraden Prismas besitzt.

8. Batterie nach einem der vorstehenden Ansprüche, **dadurch gekennzeichnet, dass** das Batteriezellenverbindungselement mit einer Mehrzahl an Polplatten verbunden ist, die jeweils eine Angussfahne (48) mit einer Angussfahnenbreite (B) besitzen, wobei eine Nutbreite (N) kleiner ist als Hälfte der Angussfahnenbreite (B).

9. Verfahren zum Herstellen eines Batteriezellenverbindungselements (20) für eine Batterie und zum Angießen von Polplatten mit dem Batteriezellenverbindungselement (20), insbesondere einen Bleiakkumulator, mit den Schritten:
(a) Bereitstellen einer Mehrzahl an Polplatten und
(b) Angießen der Polplatten mit dem Batteriezellenverbindungselement (20), sodass es folgendes umfasst:
(i) einen sich entlang einer Längsachse (L) erstreckenden, im Wesentlichen prismatischen Grundkörper (22) zum Verbinden mit der Mehrzahl an Polplatten an einer Unterseite (26) des Grundkörpers (22),
(ii) eine Kontaktlasche (24), die benachbart zu einer kontaktlaschenseitigen Stirnseite (30) des Grundkörpers (22) angeordnet ist und mit diesem einstückig verbunden ist, und
(iii) eine in dem Grundkörper (22) ausgebildete, in die Unterseite (26) laufende Nut (46) in der kontaktlaschenseitigen Stirnseite (30) des Grundkörpers (22), wobei die Nut (46) entlang einer vollen Höhe in dem Grundkörper (22) ausgebildet ist.

## Claims

1. A battery, in particular a lead-acid rechargeable battery, having at least one battery cell connecting element (20), which has
(a) an essentially prismatic base body (22), which extends along a longitudinal axis (L), for connection to a plurality of pole plates on a lower face (26) of the base body (22), and
(b) a contact lug (24), which is arranged adjacent to a contact lug (24), which is arranged adjacent to a contact-lug-side end face (30) of the base body (22) and is integrally connected to it,
**characterized by** a groove (46) which is formed in the base body (22) and runs into the lower face (26) in the contact-lug-side end face (30) of the base body (22), wherein the groove (46) is formed over the entire height in the base body (22).

2. The battery as claimed in claim 1, **characterized in that** the groove (46) runs essentially at right angles to the lower face (26).

3. The battery as claimed in claim 1 or 2, **characterized in that** the groove (46) runs inclined with respect to the lower face through 10° to 20°, in particular through 15°, in the direction of the longitudinal axis (L).

4. The battery as claimed in one of the preceding claims, **characterized in that** the groove (46) runs into the lower face (26) essentially centrally with respect to a lateral axis (Q) which runs at right angles to the longitudinal axis (L).

5. The battery as claimed in one of the preceding claims, **characterized in that** the base body (22) has a concave upper face (28), opposite the lower face (26), which comprises a groove (38) which extends along the longitudinal axis (L) and runs into the groove (46) in the contact-lug-side end face (30).

6. The battery as claimed in claim 4, **characterized in that** the groove (38) runs essentially at right angles to the contact lug /24) and subdivides the base body (22) into a contact-lug-side longitudinal section (40) and a contact-lug-averted longitudinal section (42), with the contact-lug-side longitudinal section (40) running into the contact lug (24) in a shoulder (50).

7. The battery as claimed in one of the preceding claims, **characterized in that** the base body is in the form of a right-angled prism.

8. The battery as claimed in one of the preceding claims, **characterized in that** the battery cell connecting element is connected to a plurality of pole plates, which each have a cast lug (48) with a cast lug width (B), wherein a groove width (N) is less than half the cast lug width (B).

9. A method for production of a battery cell connecting element (20) for a battery and for casting of pole plates with the battery cell connecting element (20), in particular a lead-acid rechargeable battery, having the following steps:
(a) provision of a plurality of pole plates and
(b) casting of the pole plates with the battery cell connecting element (20), such that it comprises the following:
(i) an essentially prismatic base body (22), which extends along a longitudinal axis (L), for connection to the plurality of pole plates on a lower face (26) of the base body (22),
(ii) a contact lug (24), which is arranged adjacent to a contact-lug-side end face (30) of the base body (22) and is integrally connected to it, and
(iii) a groove (46) which is formed in the base body (22) and runs into a lower face (26) in the contact-lug-side end face (30) of the base body (22).

## Revendications

1. Batterie, notamment accumulateur au plomb, présentant au moins un élément (20) de raccordement de cellules de batterie qui comporte
(a) un corps de base (22) essentiellement prismatique et s'étendant suivant un axe longitudinal (L), destiné à être relié à plusieurs plaques polaires sur le côté inférieur (26) du corps de base (22) et
(b) une patte de contact (24) disposée au voisinage d'un côté frontal (30), situé du côté de la patte de contact, du corps de base (22) et reliée d'un seul tenant à ce dernier,
**caractérisée par**
une rainure (46) ménagée dans le côté frontal (30), situé du côté de la patte de contact, du corps de base (22), formée dans le corps de base (22) et s'étendant sur le côté inférieur (26), la rainure (46) étant formée sur toute la hauteur du corps de base (22).

2. Batterie selon la revendication 1, **caractérisée en ce que** la rainure (46) s'étend essentiellement à la perpendiculaire du côté inférieur (26).

3. Batterie selon les revendications 1 ou 2, **caractérisée en ce que** la rainure (46) s'étend dans la direction de l'axe longitudinal (L), sous une inclinaison de 10° à 20° et en particulier de 15° par rapport au côté inférieur.

4. Batterie selon l'une des revendications précédentes, **caractérisée en ce que** la rainure (46) s'étend dans le côté inférieur (26) essentiellement au milieu par rapport à un axe transversal (Q) qui s'étend perpendiculairement à l'axe longitudinal (L).

5. Batterie selon l'une des revendications précédentes, **caractérisée en ce que** le corps de base (22) possède un côté supérieur (28) concave, situé face au côté inférieur (26) et comportant un sillon (38) qui s'étend suivant l'axe longitudinal (L) et qui se prolonge en la rainure (46) sur le côté frontal (30) situé du côté de la patte de contact.

6. Batterie selon la revendication 4, **caractérisée en ce que** le sillon (38) s'étend essentiellement à la perpendiculaire de la patte de contact (24) et divise le corps de base (22) en une partie longitudinale (40) située du côté de la patte de contact et une partie longitudinale (42) non tournée vers la patte de contact, la partie longitudinale (40) située du côté de la patte de contact se prolongeant en un épaulement (50) dans la patte de contact (24).

7. Batterie selon l'une des revendications précédentes, **caractérisée en ce que** le corps de base possède la forme d'un prisme droit.

8. Batterie selon l'une des revendications précédentes, **caractérisée en ce que** l'élément de raccordement des cellules de batterie est relié à plusieurs plaques polaires qui possèdent chacune une ailette de coulée (48) qui présente une largeur (B), la largeur (N) de la rainure étant inférieure à la moitié de la largeur (B) de l'ailette de coulée.

9. Procédé de fabrication d'un élément (20) de raccordement de cellules de batterie prévu pour une batterie et de coulée de plaque polaire avec l'élément (20) de raccordement de cellules de batterie, en particulier pour un accumulateur au plomb, le procédé présentant les étapes qui consistent à :
(a) préparer plusieurs plaques polaires,
(b) couler des plaques polaires avec l'élément (20) de raccordement de cellules de batterie de telle sorte que ce dernier présente :
(i) un corps de base (22) essentiellement prismatique et s'étendant suivant un axe longitudinal (L), destiné à être relié à plusieurs plaques polaires sur le côté inférieur (26) du corps de base (22),
(ii) une patte de contact (24) disposée au voisinage d'un côté frontal (30), situé du côté de la patte de contact, du corps de base (22) et reliée d'un seul tenant à ce dernier et
(iii) une rainure (46) ménagée dans le côté frontal (30), situé du côté de la patte de contact, du corps de base (22), formée dans le corps de base (22) et s'étendant sur le côté inférieur (26), la rainure (46) étant formée sur toute la hauteur du corps de base (22).
